# EUROPÄISCHE PATENTSCHRIFT

(11) **EP 1 239 985 B1**
(45) Veröffentlichungstag und Bekanntmachung des Hinweises auf die Patenterteilung: **16.07.2003**
(21) Anmeldenummer: 00984992.8
(22) Anmeldetag: 09.11.2000
(51) Int. Cl.: B23B 31/117

(54) **SPANNFUTTER**
CLAMPING CHUCK
MANDRIN DE SERRAGE

(30) Priorität: 20.12.1999 DE 19961563
(43) Veröffentlichungstag der Anmeldung: 18.09.2002
(73) Patentinhaber: Schunk GmbH & Co. KG Fabrik für Spann- und Greifwerkzeuge, 74348 Lauffen (DE)
(72) Erfinder: RETZBACH, Thomas, 74357 Bönnigheim (DE)
(74) Vertreter: Paul, Dieter-Alfred, Dipl.-Ing.
(86) Internationale Anmeldenummer: EP0011060
(87) Internationale Veröffentlichungsnummer: WO01045884

(56) Entgegenhaltungen:
- GB-A- 883 667
- US-A- 4 799 838

## Beschreibung

Die vorliegende Erfindung betrifft ein Spannfutter mit einem Futterkörper aus einem formsteifen Material, an dem eine Spannhülse vorgesehen ist, die eine zentrale Aufnahme für ein zu spannendes Werkstück oder Werkzeug bildet, und Spannmitteln, um das zu spannende Bauteil in der Aufnahme unter elastischer Verformung der Spannhülse zu fixieren.

Ein derartiges Spannfutter, das beispielsweise eingesetzt wird, um einen Werkzeugschaft wie einen Bohrer- oder Fräserschaft an der Arbeitsspindel einer entsprechenden Werkzeugmaschine zu fixieren, ist u.a. aus der WO 98/32563 bekannt. Es umfaßt einen Grundkörper aus einem formsteifen Material, der an seinem einen Endbereich einen Befestigungskonus zur Einspannung in einer drehangetriebenen Arbeitsspindel einer Werkzeugmaschine aufweist. An dem anderen Ende des Grundkörpers ist eine dünnwandige Spannhülse vorgesehen, die eine im wesentlichen zylindrische Aufnahme für ein zu spannendes Bauteil bildet und eine zu ihrem freien Ende hin konusförmig zulaufende Auβenfläche besitzt. Die Fixierung eines in die Aufnahme eingesetzten Bauteils erfolgt bei dem bekannten Spannfutter, indem ein Schrumpfring auf die Spannhülse von deren freien Ende her aufgepreßt wird, wodurch das Material der Spannhülse nach innen gegen das zu spannende Bauteil verformt wird. Da bei dieser Art der Spannung das Material der Spannhülse verquetscht wird, sind sehr hohe Spannkräfte erforderlich. Ein weiterer Nachteil besteht darin, daß es der Anordnung an radialer Steifigkeit fehlt, da der Schrumpfring beim Aufschieben auf die Spannhülse nicht in Anlage mit dem Futterkörper kommt und somit die Spannhülse nicht abstützen kann.

Aufgabe der Erfindung ist es daher, ein Spannfutter der eingangs genannten Art so auszugestalten, daß geringere Spannkräfte erforderlich sind und es insbesondere auch eine hohe radiale Steifigkeit besitzt.

Dies Aufgabe ist erfindungsgemäß dadurch gelöst, daß in dem Futterkörper eine Ringnut ausgebildet ist, welche die Aufnahme unter Bildung der Spannhülse umgibt und zur Stirnseite des Futterkörpers offen ist, und daß als Spannmittel ein Keilring vorgesehen ist, der einen Ringköper und mehrere daran in Umfangsrichtung beabstandet voneinander angeordnete und im wesentlichen axial abragende Spannzungen aufweißt, die einen zu dem freien Ende hin keilförmig zulaufenden Querschnitt besitzen und unter radialer Verformung der Spannhülse axial in die Ringnut einpreßbar sind. Erfindungsgemäß erfolgt somit die Fixierung eines Bauteils in der Spannfutteraufnahme, indem die Spannzungen in die Ringnut eingepreßt werden. Dadurch, daß die Spannzungen in Umfangsrichtung beabstandet voneinander angeordnet sind, wird dabei das Material der Spannhülse nur in denjenigen Teilbereichen radial nach innen verformt, in denen sie in Kontakt mit den Spannzungen steht, während das Material der Spannhülse in den zwischen den Spannzungen gelegenen Umfangsbereichen auch radial nach außen in die Ringnut ausweichen kann, so daß das Material nicht wie bei dem bekannten Spannfutter, bei dem eine Vollrundspannung vorgesehen ist, verquetscht wird. Des weiteren stützen sich die in die Ringnut eingepreßten Spannzungen außenseitig an dem massiven Futterkörper ab, so daß sie im Gegensatz zu dem Schrumpfring der bekannten Anordnung nicht die kompletten Spannkräfte aufzunehmen brauchen. Außerdem wird durch die Abstützung eine hohe radiale Steifigkeit erreicht.

Gemäß einer bevorzugten Ausführungsform besitzt der Keilring, der zweckmäßigerweise aus Metall und insbesondere aus Stahl bestehen kann, insgesamt drei Spannzungen, die gleichmäßig beabstandet an dem Ringkörper angeordnet sind.

Um einen flächigen gleichmäßigen Kontakt zwischen den Spannzungen und der Spannhülse zu erreichen, ist gemäß einer bevorzugten Ausführungsform vorgesehen, daß die Innenwandungen der Spannzungen auf einer zu den freien Spannzungenenden hin auseinander laufenden Konusfläche liegen und die Außenwandung der Spannhülse im wesentlich komplementär zu den Innenwänden der Spannzungen ausgebildet ist und entsprechend zur Stirnseite des Futterkörpers hin konusförmig zuläuft. Die Außenwandungen der Spannzungen können dabei auf einer gemeinsamen Zylinderfläche liegen.

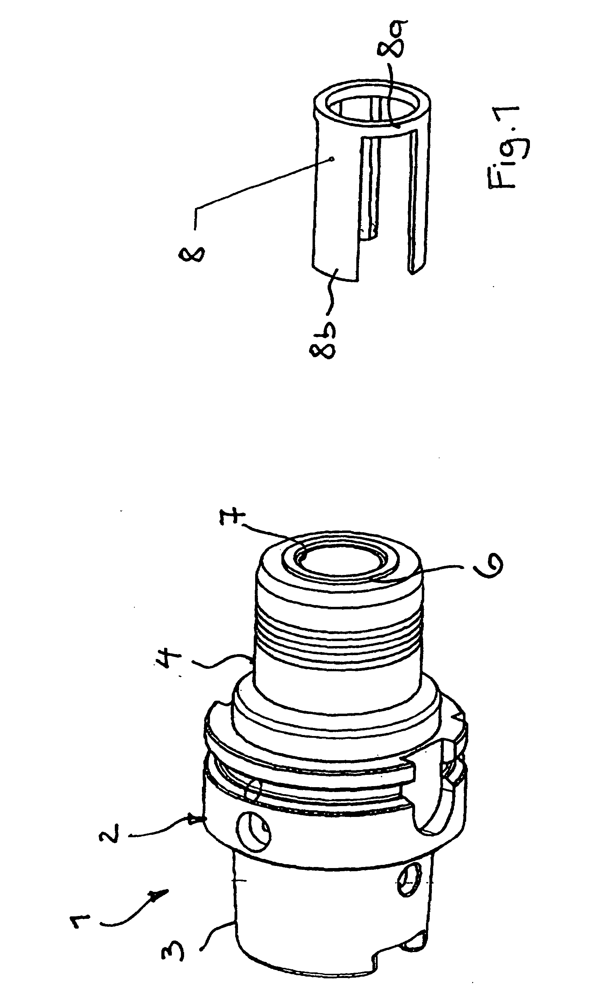

Hinsichtlich weitere vorteilhafter Ausgestaltungen der Erfindung wird auf die Unteransprüche sowie die nachfolgende Beschreibung eines Ausführungsbeispiels unter Bezugnahme auf die beiliegende Zeichnung verwiesen. In der Zeichnung zeigt
- Figur 1: eine Ausführungsform eines erfindungsgemäßen Spannfutters in perspektivischer Ansicht,
- Figur 2: das Spannfutter aus Figur 1 im Längsschnitt und
- Figur 3: das Spannfutter im Schnitt entlang der Linie B-B in Figur 2.

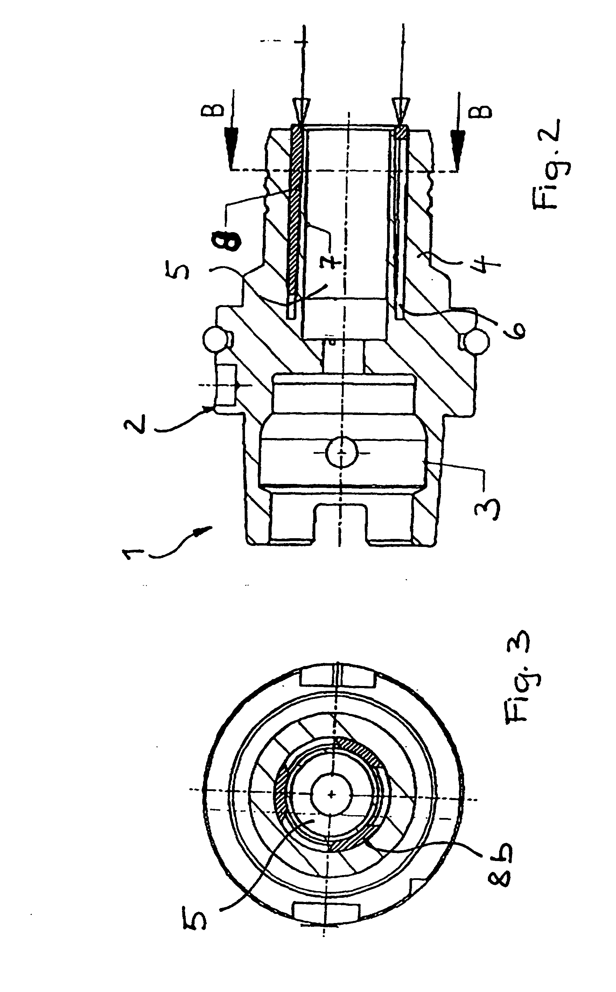

In den Figuren ist eine Ausführungsform eines Spannfutters 1 gemäß der vorliegenden Erfindung dargestellt. Das Spannfutter 1 umfaßt einen Grundkörper 2 aus einem formsteifen Material, der an seinem in der Zeichnung linksseitigen Endbereich in ansich bekannter Weise einen Befestigungskonus 3 zur Einspannung in einer drehangetriebenen Arbeitsspindel einer Werkzeugmaschine aufweist. An dem anderen Ende des Grundkörpers 2 ist ein Anschlußschaft 4 mit einer zentralen Aufnahme 5 vorgesehen, in die ein zylindrischer Schaft eines Werkzeugs wie beispielsweise eines Bohrers oder Fräsers eingeschoben werden kann. In dem Anschlußschaft 4 ist ein Ringraum bzw. eine Ringnut 6 ausgebildet, welche die Aufnahme 5 umgibt und koaxial zu dieser ausgerichtet ist. Die Ringnut 6, deren axiale Länge etwa dem erforderlichen Spannbereich entspricht, wird zur Aufnahme 5 hin von einer relativ dünnen Innenwand - Spannhülse 7 genannt - und radial nach außen von der Wandung des Grundkörpers 2, dessen Wandstärke um ein mehrfaches größer als die Wandstärke der Spannhülse 7 ist, begrenzt. Wie insbesondere in Figur 2 erkennbar ist, besitzt die Ringnut 7 einen etwa keilförmigen Querschnitt, der so gestaltet ist, daß die Außenwandung der Spannhülse 7 zum freien Ende des Anschlußschaftes 4 hin konisch zuläuft, während die Außenwandung der Ringnut 6 zylindrisch ist.

Zur Fixierung eines Werkzeugschaftes oder dergleichen in der Aufnahme 5 ist ein Keilring 8 vorgesehen, der einen Ringkörper 8a und drei Spannzungen 8b, die an dem Ringkörper 8a in Umfangsrichtung beabstandet voneinander angeordnet sind und sich im wesentlichen in Axialrichtung erstrecken, aufweist. Die Spannzungen 8b laufen zu ihren freien Enden hin keilförmig zu, wobei ihre Außenwandungen auf einer zylinderfläche liegen, deren Durchmesser etwa dem Außendurchmesser der Ringnut 6 entspricht, und die Innenwandungen entsprechend der Außenwandung der Spannhülse 7 auf einer zu den freien Spannzungenenden hin auseinanderlaufenden Konusfläche liegen. Der Keilring 8 kann in die Ringnut 6 von der Stirnseite des Anschlußschaftes 4 her eingetrieben werden, wodurch die Spannhülse 7 in den Kontaktbereich mit den Spannzungen 8b radial nach innen verformt wird und dadurch einen in die Aufnahme 5 eingesetzten Werkzeugschaft oder dergleichen fixiert. Dabei kann in den zwischen den Spannzungen 8b gelegenen Umfangsbereichen das Material der Spannhülse 7 in die Ringnut 6 nach außen ausweichen. Wenn der Keilring 8 in die Ringnut 6 eingetrieben ist, stützen sich die Spannzungen 8b außenseitig an dem Grundkörper 2 ab, wodurch eine hohe radiale Festigkeit der Anordnung erreicht wird.

Zum Lösen der Verbindung ist ein nicht dargestellter Hydraulikmechanismus vorgesehen, durch den das in der Zeichnung linkseitige Ende der Ringnut 6 mit einem Hydraulikmittel beaufschlagt werden kann, um in der Ringnut 6 einen Druck zu erzeugen, durch welchen der Grundkörper 2 leicht aufgeweitet wird, so daß der Keilring 8 leicht aus der Ringnut 6 gelöst werden kann.

## Patentansprüche

1. Spannfutter mit einem Futterkörper (2) aus einem formsteifen Material, an dem eine Spannhülse (7) vorgesehen ist, die eine zentrale Aufnahme (5) für ein zu spannendes Werkstück oder Werkzeug bildet, und Spannmitteln (8), um das zu spannende Bauteil in der Aufnahme (5) unter elastischer Verformung der Spannhülse (7) zu fixieren, **dadurch gekennzeichnet, daß** in dem Futterkörper (2) eine Ringnut (6) ausgebildet ist, welche die Aufnahme (5) unter Bildung der Spannhülse (7) umgibt und zur Stirnseite des Futterkörpers (2) offen ist, und daß als Spannmittel ein Keilring (8) vorgesehen ist, der einen Ringkörper (8a) und mehrere daran in Umfangsrichtung beabstandet voneinander angeordnete und im wesentlichen axial abragende Spannzungen (8b) aufweist, die einen zu den freien Enden hin keilförmig zulaufenden Querschnitt besitzt und unter radialer Verformung der Spannhülse (7) axial in die Ringnut (6) einpreßbar sind.

2. Spannfutter nach Anspruch 1, **dadurch gekennzeichnet, daß** der Keilring (8 )insgesamt drei Spannzungen (8a) aufweist, die gleichmäßig beabstandet an dem Ringkörper (8b) angeordnet sind.

3. Spannfutter nach Anspruch 1 oder 2, **dadurch gekennzeichnet, daß** die Außenwandungen der Spannzungen (8b) auf einer gemeinsamen Zylinderfläche liegen.

4. Spannfutter nach einem der vorherigen Ansprüche, **dadurch gekennzeichnet, daß** die Innenwandungen der Spannzungen (8b) auf einer zu den freien Spannzungenenden hin auseinanderlaufenden Konusfläche liegen.

5. Spannfutter nach Anspruch 4, **dadurch gekennzeichnet, daß** die Außenwandung der Spannhülse (7) im wesentlichen komplementär zu den Innenwänden der Spannzungen (8b) ausgebildet ist und entsprechend zur Stirnseite des Futterkörpers (2) hin konusförmig zuläuft.

6. Spannfutter nach einem der vorherigen Ansprüche, **dadurch gekennzeichnet, daß** der Keilring (8a) aus Metall, insbesondere aus Stahl besteht.

## Claims

1. A clamping chuck having a chuck body (2) made of a dimensionally stable material, on which is provided a clamping sleeve (7) that forms a central receptacle (5) for a workpiece or tool that is to be clamped, and having clamping means (8) for immobilizing in the receptacle (5) the component that is to be clamped, while elastically deforming the clamping sleeve (7),
wherein there is configured in the chuck body (2) an annular groove (6) which surrounds the receptacle (5) to form the clamping sleeve and is open toward the end face of the chuck body (2); and what is provided as the clamping means is a wedge ring (8) that has a ring body (8a) and multiple clamping tongues (8b), arranged thereon spaced apart from one another in the circumferential direction and projecting substantially axially, which possess a cross section tapering off in a wedge shape toward the free end and can be pressed axially into the annular groove (6) while radially deforming the clamping sleeve (7).

2. The clamping chuck as defined in Claim 1, wherein the wedge ring (8) has a total of three clamping tongues (8a) that are arranged in uniformly spaced-apart fashion on the ring body (8b).

3. The clamping chuck as defined in Claim 1 or 2, wherein the outer walls of the clamping tongues (8b) lie on a common cylindrical surface.

4. The clamping chuck as defined in one of the foregoing claims, wherein the inner walls of the clamping tongues (8b) lie on a conical surface diverging toward the free clamping tongue ends.

5. The clamping chuck as defined in Claim 4, wherein the outer wall of the clamping sleeve (7) is configured in substantially complementary fashion to the inner walls of the clamping tongues (8b), and correspondingly tapers off conically toward the end face of the chuck body (2).

6. The clamping chuck as defined in one of the foregoing claims, wherein the wedge ring (8a) is made of metal, in particular of steel.

## Revendications

1. Mandrin de serrage avec un corps de mandrin (2) formé dans un matériau rigide sur lequel mandrin est prévu une douille de serrage (7) qui forme une réception (5) centrale pour maintenir une pièce à usiner ou un outil à serrer et avec des moyens de serrage (8) pour fixer un élément à serrer dans la réception (5) par la déformation élastique de la douille de serrage (7), **caractérisé en ce que** une rainure annulaire (6) est formée dans le corps du mandrin (2), laquelle rainure entoure la réception (5) en formant une douille de serrage (7) et est ouverte vers le front du corps du mandrin (2), et **caractérisé en ce qu'**un anneau de calage (8) est prévu comme moyen de serrage, lequel comporte un corps annulaire (8a) et plusieurs pattes de serrage (8b) disposées de manière espacée les unes par rapport aux autres en direction de la circonférence et faisant saillie essentiellement de manière axiale, lesquelles pattes de serrage possèdent une coupe transversale de façon convergente sous en forme de cale vers les extrémités libres et peuvent être appliquées axiallement par compression dans la rainure annulaire (6) par l'effet d'une déformation de la douille de serrage (7) .

2. Mandrin de serrage selon la revendication 1, **caractérisé en ce que** l'anneau de calage (8) comporte trois pattes de serrage en tout (8a) qui sont disposées sur le corps annulaire (8b) à distances régulières.

3. Mandrin de serrage selon la revendication 1 ou 2, **caractérisé en ce que** les parois extérieures des pattes de serrage (8b) sont situées sur une surface de cylindre commune .

4. Mandrin de serrage selon une des revendications précédentes, **caractérisé en ce que** les parois intérieures des pattes de serrage (8b) se situent sur une des surfaces coniques divergentes orientées vers les pattes de serrage libres.

5. Mandrin de serrage selon la revendication 4, **caractérisé en ce que** la paroi extérieure de la douille de serrage (7) est formée en grande partie de manière complémentaire aux parois intérieures des pattes de serrage (8b) et converge coniquement de manière correspondante vers le côté avant du corps de mandrin (2).

6. Mandrin de serrage selon une des revendications précédentes, **caractérisé en ce que** l'anneau de calage (8a) est composé de métal, notamment d'acier.
